# EUROPEAN PATENT APPLICATION

(11) **EP 0 854 022 A1**
(43) Date of publication of application: **22.07.1998**
(21) Application number: 98300056.3
(22) Date of filing: 06.01.1998
(51) Int. Cl.: B29C 35/10, C03C 25/02, C03B 37/027, G02B 6/44

(54) **Two stage curing for optical fiber**

(30) Priority: 15.01.1997 US 783968
(71) Applicant: LUCENT TECHNOLOGIES INC., Murray Hill, New Jersey 07974-0636 (US)
(72) Inventor: Moore, Robert Clark, Roswell, Georgia 30076 (US); Turnipseed, John Michael, Lilburn, Georgia 30247 (US); Taylor, Carl Raymond, Lawrenceville, Georgia 30243 (US)
(74) Representative: Johnston, Kenneth Graham

(57) **Abstract**

Apparatus and method for rapidly curing an optical fiber coating are disclosed wherein a coating system 25 that includes a photoinitiator is applied to a moving glass fiber 21. The photoinitiator responds to radiation in a first wavelength region of the electromagnetic spectrum to initiate free-radical polymerization of the coating system. After the coating system has been applied to the glass fiber, a pair of curing stations 30-1, 30-2, which are separated by a cooling gap 35, are used to cure the coated glass fiber. Each curing station includes lamps 31 that emit radiation in the first wavelength region, and each curing station provides partial curing (*i.e.,* less than 65%) of the coating system. The separation between curing stations causes the fiber to cool naturally because the partially cured coating materials are much warmer than the ambient air between the stations. Cooling is enhanced within the gap between curing stations by stripping a portion of the hot gas boundary layer entrained by the moving fiber, and/or by causing the coated glass fiber to come into direct contact with one or more rotating sheaves 51, 52. By curing the coating materials in multiple stages, and then cooling the coating system between stages, a substantial increase in draw speed is achieved. This technique is applicable to an optical fiber having one or more layers of protective coating materials. In a dual-coated optical fiber, curing speed is further enhanced by using different photoinitiators in each layer - each photoinitiator being selected to respond to radiation in a different wavelength region.

## Description

### Technical Field

This invention relates to coated optical fibers and to a method of making same. More particularly, the invention relates to an arrangement for rapidly curing an optical fiber that has been coated with one or more layers of protective materials.

### Background of the Invention

In the manufacture of optical fiber, a glass preform rod is suspended vertically and moved into a furnace at a controlled rate. The preform softens in the furnace, and a glass fiber is drawn freely from the molten end of the rod by a capstan located at the base of a draw tower. Because the surface of a glass fiber is susceptible to damage caused by abrasion, it is necessary to coat the glass fiber after it is drawn but before it comes into contact with any surface. Inasmuch as the application of a coating material must not damage the glass surface, the coating material is applied in a liquid state. The fiber is coated by passing it through a reservoir of ultraviolet (UV)-curable organic material such as urethane acrylate. Once applied, the coating material must solidify before the glass fiber reaches the capstan. This is typically accomplished within a brief time interval by photocuring -- a process in which the liquid coating material is converted to a solid by exposure to UV radiation.

Typically, two layers of coating materials are applied to the drawn glass fiber, and two different kinds of coating materials are used. An inner layer, referred to as primary coating material, is applied to the optical glass fiber. And an outer layer, referred to as a secondary coating, is applied to the primary coating material. Usually, the secondary coating has a relatively high modulus *(e.g.,* 10⁹ Pa), whereas the primary coating has a relatively low modulus *(e.g.,* 10⁶ Pa). In one arrangement, the primary and the secondary coatings are simultaneously applied. This arrangement is known as a "wet/wet" system because the secondary coating is applied directly onto a non-cured primary coating. Each coating materials is characterized by a photoactive region. A photoactive region is that region of the light spectrum which upon the absorption of curing light causes the coating to change from a liquid material to a solid material. The materials which are generally used for the primary and secondary have comparable photoactive regions. And because the photoactive regions are comparable, the curing light for the primary coating material will be attenuated by the secondary coating material. As a result, less light reaches the primary coating material.

The demand for optical fiber now exceeds the ability to produce it. And while this is good news for optical fiber manufacturers, many customers have to be turned away, which is unfortunate. The obvious solutions are to build more draw towers and/or to increase the speed at which draw towers operate. At the present time, the coating procedure (not the drawing procedure) limits the maximum rate at which an acceptable fiber is produced. Since a large capital investment is involved in a draw tower, it is naturally desirable to run the drawing and coating processes at the highest speed that is consistent with the production of a coating of acceptable quality.

Glass fiber emerges from a furnace, where the temperature is about 2000° C, and must be cooled prior to the application of coating materials to ensure uniformity and proper adhesion to the glass fiber. It is known to cool glass fiber either by reducing the line speed or by increasing the distance between the furnace and the coating station. Neither technique was particularly satisfactory. U. S. Patent 4,761,168 solves the problem by installing a fiber-cooling apparatus between the furnace and the coating station that stripped away the gas boundary layer entrained by the moving fiber. The cooling apparatus comprises a cylindrical vessel having a circular hole, approximately 1.5 millimeters in diameter, through which the fiber moves in one direction and cool helium gas flows in the other.

U. S. Patent 5,000,772 further increases the manufacturing line speed of coated optical fiber by the simultaneous application of a magnetic field during irradiation of the curable coating materials to enhance the crosslinking of the coating materials by a free-radical polymerization mechanism. Upon absorption of light, a photoinitiator in each coating cleaves to produce two free-radical fragments in the spin paired or singlet state. The magnetic field has the effect of enhancing the production of spin parallel radicals which enhances the polymerization initiation of the coating material.

U. S. Patent 5,147,433 (the '433 patent) recognizes that the primary coating cures more slowly than the secondary coating because the secondary coating attenuates the amount of radiation that reaches the primary coating. The '433 patent solves this problem by using different photoinitiators in the primary and secondary coatings, and by using first and second curing stations. One curing station utilizes visible light to fully cure the *primary* coating while the next curing station uses UV light to fully cure the *secondary* coating. This technique hastens the cure of the primary coating. Nevertheless, in view of the substantial capital investment in draw towers, it is desirable to further increase the speed at which a coated optical fiber can be manufactured.

### Summary of the Invention

A substantial increase in the manufacturing line speed of coated optical fiber is achieved by a split-lamp system for curing coated optical fiber. The optical fiber includes a protective coating material having a photoinitiator that responds to radiation in a first wavelength region of the electromagnetic spectrum. The function of the photoinitiator is to initiate free-radical polymerization of the coating material. After the coating material has been applied to a glass fiber, it is partially cured by exposure to radiation in the first wavelength region. Thereafter, the coating material is cooled and again exposed to radiation in the first wavelength region for additional curing.

In illustrative embodiments of the invention, a pair of curing stations are separated by a predetermined distance (gap), which allows the coating material to cool between stations. In one embodiment, cooling is enhanced within the gap by apparatus that "strips away" the hot gas boundary layer entrained by the moving fiber; and in another embodiment, cooling is enhanced within the gap by direct contact with one or more sheaves that function as heat sinks. By curing the coating material in multiple stages, and cooling the coating material between stages, a substantial increase in overall curing speed is achieved.

In yet another illustrative embodiment, a *dual-coated* optical fiber is cured according the principles of the invention. Each coating includes a photoinitiator for initiating the polymerization process. The primary coating responds to radiation in the first wavelength region while the secondary coating responds to radiation in a second wavelength region. Preferably, the first and second wavelength regions are disjoint from each other. At each curing station, ultraviolet lamps emit radiation in the first and second wavelength regions to partially and simultaneously cure the primary and secondary coatings.

Experimental results show that the present invention provides: a 40% increase in manufacturing line speed; a 50% reduction in the number of ultraviolet lights needed for the curing process; a 50% reduction in the power and clean air requirements; and a reduction in the overall height of the draw tower.

### Brief Description of the Drawing

The invention and its mode of operation will be more readily understood from the following detailed description when read in conjunction with the appended drawing, in which:
FIG. 1 is a schematic view of a prior art optical fiber manufacturing line having a combined-lamp system for curing the optical fiber;
FIG. 2 is a sectional end view of an optical fiber having a single layer of coating material;
FIG. 3 is a sectional end view of an optical fiber having multiple layers of coating material;
FIG. 4 is a schematic view of one embodiment of an optical fiber manufacturing line having split-lamp system for curing the optical fiber wherein cooling is enhanced within the gap by a device that "strips away" the hot gas boundary layer entrained by the moving fiber;
FIG. 5 is a schematic view of another embodiment of an optical fiber manufacturing line having split-lamp system for curing the optical fiber wherein cooling is enhanced within the gap by one or more sheaves that function as heat sinks;
FIG. 6 is a side-by-side comparison between the combined-lamp system of FIG. 1 and the split-lamp system of FIG. 4;
FIG. 7 is a histogram that shows the emission spectrum of a commercially available curing lamp which is suitable for use in the present invention;
FIG. 8 is a graph showing the experimental results of the amount of cure of a primary coating material as a function of temperature for 0.6 seconds of ultraviolet exposure;
FIG. 9 is a graph showing temperature profiles of fiber in a split-lamp system and fiber in a combined-lamp system; and
FIG. 10 is a graph showing the amount of ultraviolet exposure used for curing a coated optical fiber by a split-lamp system as compared to a combined-lamp system.

### Detailed Description

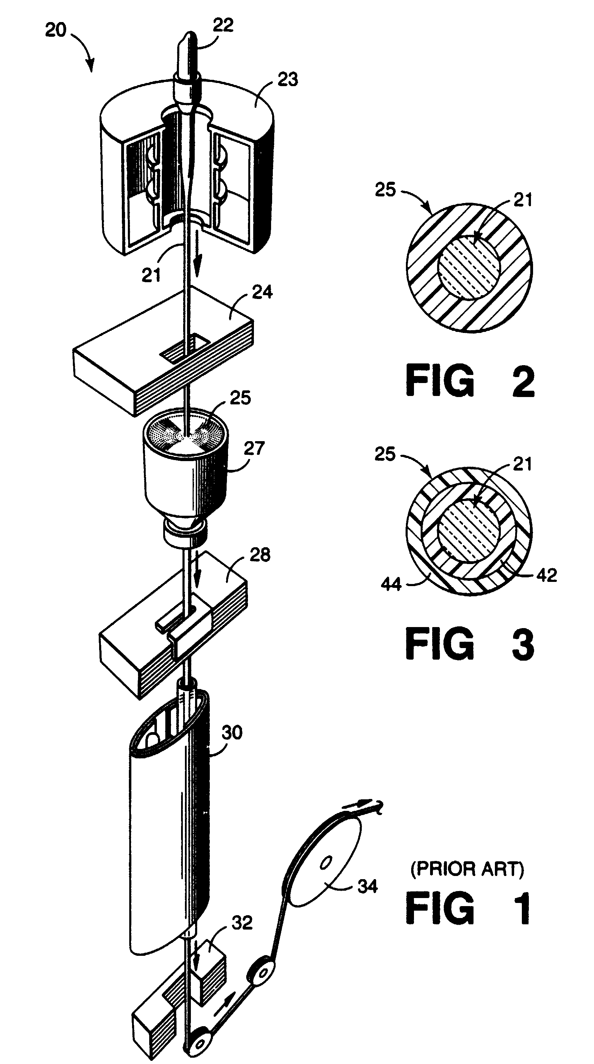

FIG. 1 discloses a schematic view of a prior art optical fiber manufacturing line having a combined-lamp system for curing the optical fiber. The overall manufacturing line, designated generally by the numeral 20, is used to draw a glass fiber from a specially prepared cylindrical preform, coat the glass fiber with a protective material system, and then cure the coated glass fiber with electromagnetic radiation. Glass fiber 21 is formed by locally and symmetrically heating the preform 22, typically 15 to 40 mm in diameter and 60 cm in length, to a temperature of about 2000° C. As the preform is fed into and through a furnace 23, fiber 21 is drawn from the molten material.

As can be seen in FIG. 1, the elements of the draw system include the furnace 23 wherein the preform is drawn down to the fiber size after which the fiber 21 is pulled from a heat zone therein. The diameter of the fiber 21 is measured by a device 24 at a point shortly after the fiber is formed and this measured value becomes an input into a control system. Within the control system, the measured diameter is compared to the desired value and an output signal is generated to adjust the draw speed such that the fiber diameter approaches the desired value.

After the diameter of the optical fiber 21 is measured, a protective coating system 25 (see also FIG. 2) is applied to the fiber by an apparatus 27. Preservation of fiber strength requires the application of the protective coating, which shields newly drawn fiber from the deleterious effects of the atmosphere. This coating system must be applied in a manner that does not damage the surface of the fiber 21 and such that the fiber has a predetermined diameter and is protected from abrasion during subsequent manufacturing operations, installation and service. Minimizing attenuation, due to microbending loss, requires the selection of a suitable coating material and a controlled application of it to the fiber. A suitable coating apparatus may be one such as described in previously identified U. S. Patent 4,474,830. Minimizing diameter variation which in turn minimizes the losses due to misalignment at connector and splice points requires careful design of the draw system and the continuous monitoring and control of the fiber diameter during the drawing and the coating steps of the process. Then, the coated fiber 21 is passed through a centering gauge 28.

After the coating materials have been applied to the drawn fiber, the coating materials must be cured. Accordingly, the optical fiber having the coating materials thereon is passed through a station 30 having a number of UV lamps for curing the coating system 25, and a device 32 for measuring the outer diameter of the coated fiber. The coated fiber is pulled along its path of travel by a capstan 34 and, thereafter, wound on a spool for testing and storage prior to subsequent cabling operations.

A coating system 25 is contained within apparatus 27 for application to glass fiber 21. In the situation whereby the coating system 25 comprises *only primary* coating materials, reference is made to FIG. 2 which shows a single layer coating system 25 surrounding glass fiber 21. More typically, however, coating system 25 comprises an inner layer 42 (see FIG. 3), which is generally referred to as the primary coating, and an outer layer 44, which is generally referred to as the secondary coating. The inner layer 42 has relatively low modulus *(e.g.,* 10⁶ Pa), which prevents microbending of the glass fiber 21; while the outer layer 44 has a relatively high modulus *(e.g.,* 10⁹ Pa), which provides mechanical protection for the glass fiber.

Each of the coating materials is curable by being exposed to an appropriate portion of the electromagnetic spectrum. Such cure is accomplished via a reactive polymer that can polymerize by free-radical polymerization. Generally, each of the coating materials includes an oligomer, a diluent and a photoinitiator. Also included may be additives such as, for example, antioxidants, adhesion promoters, UV light stabilizers, surfactants and shelf life stabilizers. Of particular interest in connection with the present invention are the photoinitiators which, in response to electromagnetic radiation within a narrow range of wavelengths, cause the coating material to change from a liquid to a solid. This change of state is accompanied by the release of heat which affects on the speed at which the coating material changes state. Photoinitiators may be customized to respond (i.e., initiate free-radical polymerization) in different regions of the electromagnetic spectrum -- typically in the UV region.

It has been learned that the equilibrium modulus of a UV-cured coating is directly proportional to the crosslink density, and that the equilibrium modulus of a coating decreases with increasing cure temperature. See, for example, "The Effects of Cure Temperature on the Thermomechanical Properties of UV Curable Coatings," *Polymer Engineering and Science,* Vol. 29, No. 17, Sept., 1989 (pages 1165-1168). Therefore, it is highly desirable to cure the polymer coatings at a relatively low temperature (e.g., 20° C rather than 200° C). Furthermore, approximately 70% of the heat (temperature rise) associated with the curing process is generated by the reaction itself while only about 30% comes from the curing lamp.

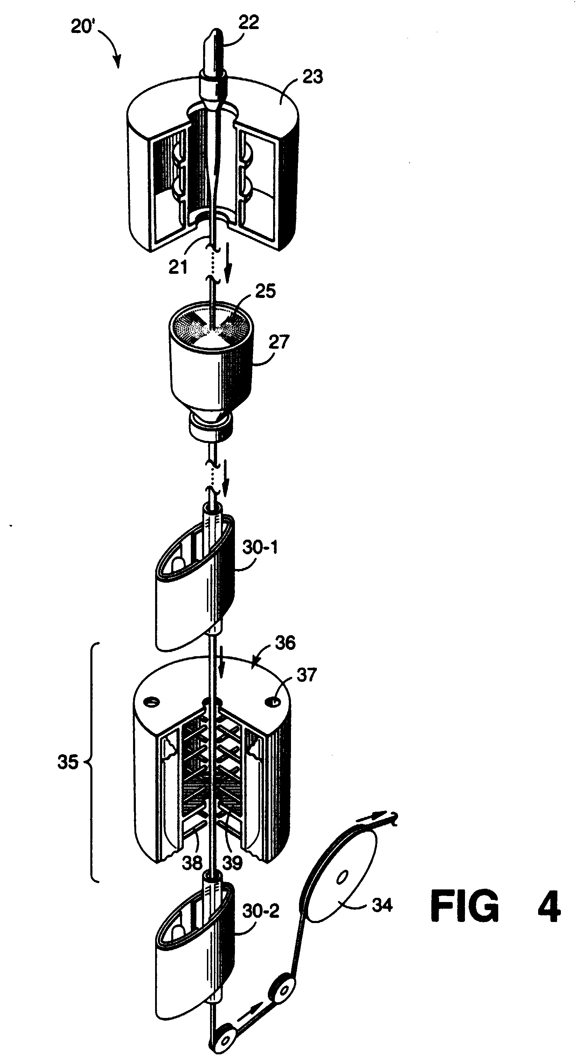

FIG. 4 is an abbreviated schematic view of a first embodiment of an optical fiber manufacturing line 20' having split-lamp system for curing the optical fiber in accordance with the present invention. Manufacturing line 20' is similar to the prior-art manufacturing line 20 shown in FIG. 1 with the significant exception that the combined-lamp curing station 30 is replaced by a split-lamp system comprising curing stations 30-1 and 30-2 which are separated by a cooling gap 35. In particular, each of the curing stations 30-1 and 30-2 is designed to only perform partial curing *(i.e.,* less than 65%). This is achieved by reducing the intensity of the lamps within each curing station and/or increasing the speed which the drawn glass fiber 21 advances through application station 27 and curing stations 30-1 and 30-2. Preferably the curing lamps used in 30-1 and 30-2 are identical to each other and have an emission spectrum whose peak is in vicinity of the photoactive region of the photoinitiator used in the primary coating material *(i. e.,* the first wavelength region).

The gap 35 between curing stations 30-1 and 30-2 is typically 0.5 - 1.0 meters in length. And although not required in the practice of the present invention, cooling is enhanced by installing a cooling apparatus within the gap. One such cooling apparatus is disclosed in U. S. Patent 4,761,168 which is hereby incorporated by reference. Briefly, the cooling apparatus operates to strip away the hot gas boundary layer entrained by the moving fiber 21. The cooling apparatus comprises a cylindrical aluminum vessel 36 having a plurality of compartments (only one of them is shown in FIG. 4) separated by barrier plates 39. The barrier plates are approximately 25 millimeters apart; and each includes circular hole, approximately 1.5 millimeters in diameter, through which the fiber moves in one direction and cool helium gas flows in the other. The purpose of the barrier 39 is to ensure that the velocity of the gas flow through the barrier in combination with any stripping done by the barrier itself is sufficient to yield the desire stripping. (A barrier need not be present if a gas flow with sufficient velocity is established by another means without inducing undesirable vibration of the fiber.) Within each compartment, a plurality of aluminum pins 38 (1.6 mm in diameter) extend radially toward the longitudinal axis of the cylindrical vessel 36. Each compartment reduces the gas boundary layer by approximately 90%. The cooling vessel 36 itself is cooled by chilled water at a temperature of approximately 4° C that is introduced into its water cooling passages 37.

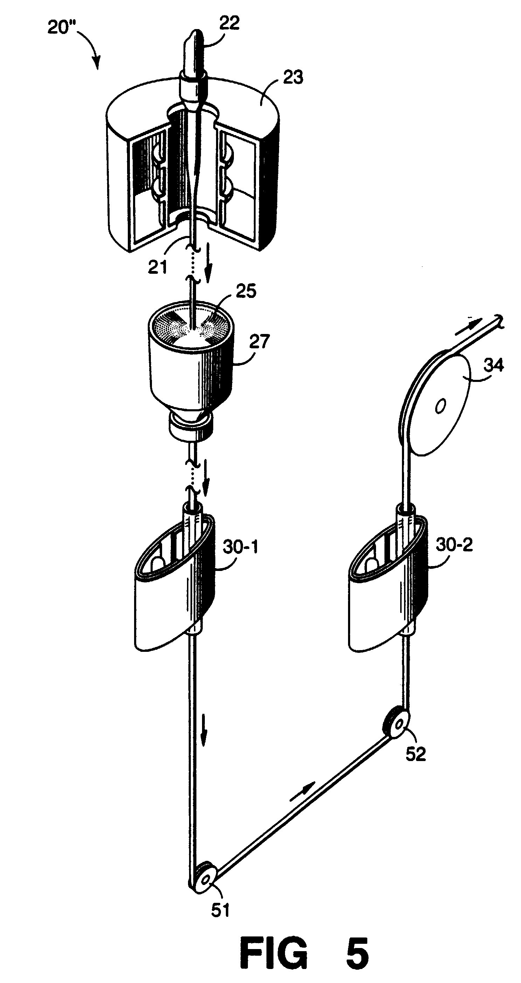

FIG. 5 is an abbreviated schematic view of a second embodiment of an optical fiber manufacturing line 20" having split-lamp system for curing the optical fiber in accordance with the present invention. Manufacturing line 20" is similar to the manufacturing line 20' shown in FIG. 4, except that sheaves 51 and 52 are now positioned in the gap between curing stations 30-1 and 30-2. Advantageously, sheaves 51 and 52 operate as heat sinks, which remove heat from the moving optical fiber. Because the path of the moving fiber is "folded," manufacturing line 20" has the additional advantage of being a more compact draw tower. And while the fiber is shown moving upwardly through curing station 30-2, it is more desirable to have it move downwardly because of the initial threading. This is readily accomplished via additional sheaves to change the path of the optical fiber to the downward direction through curing station 30-2.

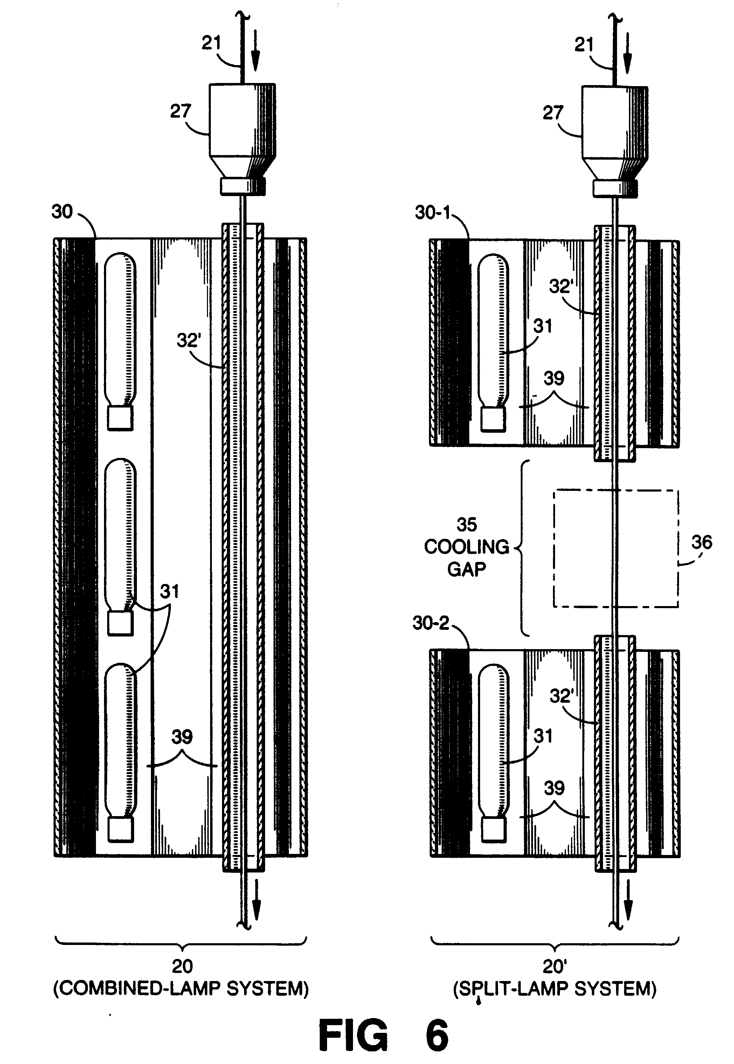

FIG. 6 provides a side-by-side comparison between the combined-lamp system 20 of FIG. 1 and the split-lamp system 20' of FIG. 4. In both systems, a moving fiber 21 is coated with one or more layers of coating material using applicator 27. The moving fiber's coating is then cured by exposure to UV radiation emanating from lamps 31. In an embodiment of the present invention, the curing process is accelerated by replacing curing station 30 with two curing stations 30-1 and 30-2 which are separated by a cooling gap 35. However, it is noted that the combined radiation emanating from curing stations 30-1 and 30-2 is only about 50% of the radiation emanating from curing station 30. And this translates into higher line speed and/or fewer curing lamps. The speed of cure is further increased by installing a cooling device 36 within the gap.

Illustratively, curing stations 30-1 and 30-2 are each provided with a housing that includes a quartz tube 32' having a longitudinal axis that is parallel to that of the housing. The quartz tube 32' is adapted to have the drawn optical fiber moved therethrough and has an inner diameter of about 2.5 cm and a thickness of about 1 mm. Also disposed within each curing station is an elongated lamp 31 which parallels the path of the optical fiber and which emits UV radiation that is used to cure the coating material or materials. The lamp 31 and the quartz tube 32' through which the fiber is moved are located at the foci of elliptical mirrors 39-39, which are positioned on the inside wall of the station, to ensure that substantially all of the periphery of the moving optical fiber is impinged by light emitted by the lamp 31. Further detail regarding the design of a suitable curing station is shown in U. S. Patent 5,092,264 which is hereby incorporated by reference.

In the situation whereby a *dual-coated* optical fiber is to be cured, it is preferable that the curing lamps used in 30-1 and 30-2 be identical to each other and have an emission spectrum whose peak is in vicinity of the first wavelength region. Moreover, it is preferable to cure the secondary coating material more slowly than the primary coating material. Accordingly, the photoinitiator associated with the secondary coating is selected to have its photoactive region *(i.e.,* the second wavelength region) where the emission spectrum of the lamps used in 30-1 and 30-2 has substantially lower intensity. It is noted that each layer of coating material is partially cured *(i.e.,* less than 65%) in coating station 30-1 and partially cured in curing station 30-2.

Suitable curing of an optical fiber coating is very important because an improperly cured fiber inhibits cabling and frequently emits an undesirable odor. Moreover, an improperly cured fiber coating exhibits poor strippability, poor adhesion, and poor reliability relative to a properly cured coating. Additionally, the modulus of the fiber coating is important to the mechanical and optical performance of the optical fiber product, and modulus is a function of the degree of cure. As should be evident, properly cured coating materials for drawn optical fibers are important to the quality of the final product.

However, it is recognized that it is not necessary to achieve 100% cure within the draw tower itself because coated optical fiber can be handled without harm with less than 100% cure. It is further recognized that one of ordinary skill in the art can vary the degree of cure achieved in each of the curing stations 30-1 and 30-2 in order to optimize overall efficiency in terms of speed, cost, etc. The degree of cure achieved in each station varies in accordance with: the amount of cooling between the curing stations; how many curing stations are used; and, in the case of multiple coatings, how the photoactive regions of the coating materials match the emission spectra of the curing lamps and the power level of the lamps.

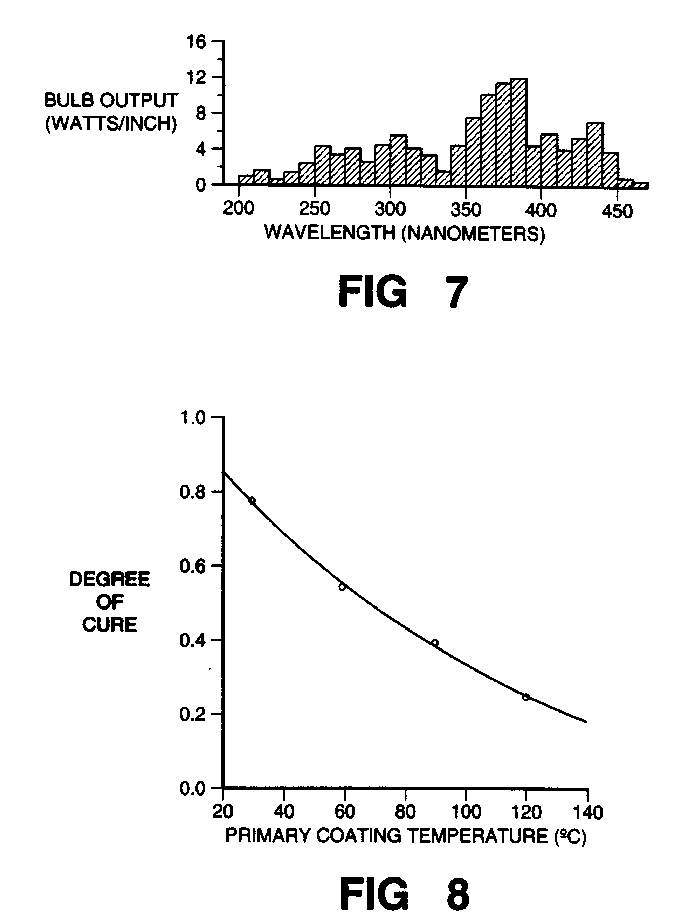

FIG. 7 is a histogram which shows the emission output of a curing lamp which is suitable for use in the present invention, and particularly a dual-coated optical fiber. The specific output spectrum shown is produced by a metal halide "D" lamp which is commercially-available from Fusion Systems Corporation. In particular, advantage is taken of the fact that emission in the 386 nanometer (nm) wavelength region is substantially greater than emission in other regions of its spectrum. Accordingly, a photoinitiator that responds to electromagnetic radiation in the 386 nm region is selected for use with the primary coating material so that it will cure at a faster rate than the secondary coating material -- which has a photoinitiator that responds to electromagnetic radiation in another wavelength region. In this regard, a photoinitiator having maximum absorbance at 382 nm is chemically known as 2,4,6-Trimethylbenzoyldiphenylphosphine oxide and is suitable for use with the primary coating material. It is commercially known as Lucirin TPO and is available from the BASF Company. The absorbance spectrum of Lucirin TPO matches the emission peak of the "D" lamp. Together, they cooperate to accelerate the curing rate of the primary coating material.

Referring once again to FIG. 7, another region of the emission spectrum of the curing lamp is selected for use in curing the secondary coating material. In this illustrative embodiment, the wavelength region in the vicinity of 330 nm is selected because the lamp output is substantially less in that region than in the 386 nm wavelength region. For the secondary coating, a suitable photoinitiator is a 2-methyl-[4-(methylthio)phenyl]-2-(4-morpholinyl)-1-propanone, such as Irgacure 907, which is commercially available from the Ciba Giegy Company. Irgacure 907 exhibits maximum absorbance at 300 nm which, it is noted, does not necessarily coincide with any special region of the lamp's emission spectrum. Rather, it was selected via trial and error from a lower emission region of the spectrum than the region used for curing the primary coating material. Indeed, given the emission spectrum of the curing lamp, it would only require a small amount of experimentation by one of ordinary skill in the chemical art, to select acceptable photoinitiators for use with the primary and secondary coating materials. Another suitable photoinitiator which may be used in the secondary coating is a 1-hydroxycyclohexyl phenyl ketone, such as Irgacure 184. This photoinitiator is also commercially available from the Ciba Geigy Company. The well-known, practical range for photoinitiators resides between 0.5% and 5.0% by weight for most UV formulations having commercial utility.

FIG. 8 is a graph showing the experimental results of the amount of cure of a primary coating material as a function of temperature for 0.6 seconds of UV exposure. What this graph dramatically illustrates is that a typical coating material cures much faster at lower temperatures. For the same UV exposure, only 35% cure is achieved when the temperature is 110° C, but about 80% cure is achieved when the temperature is lowered to 30° C.

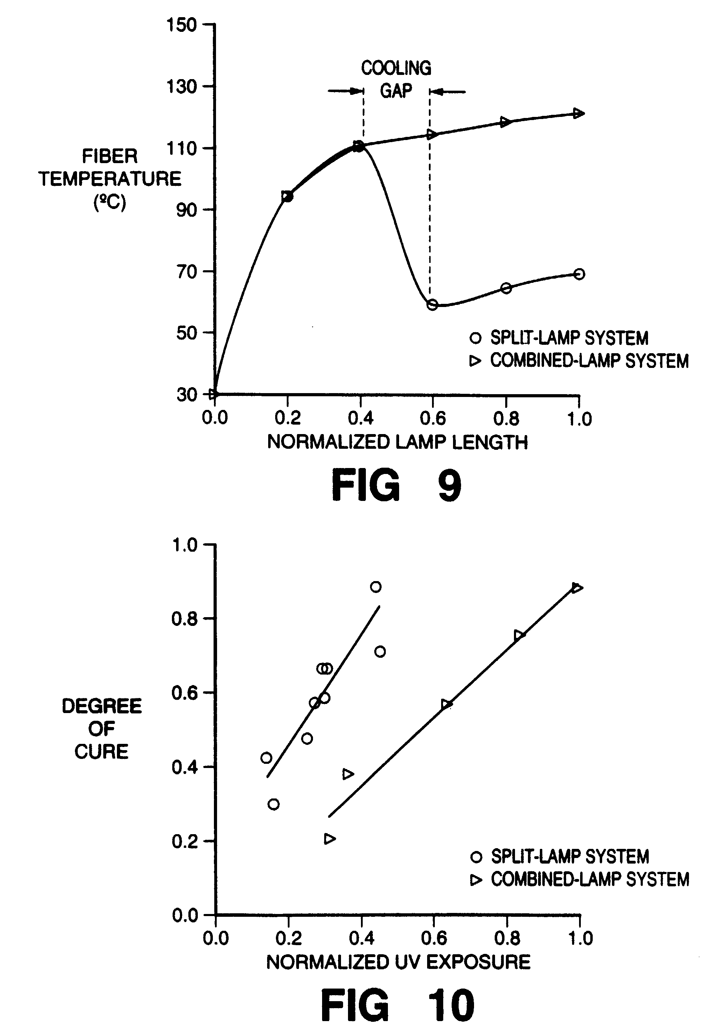

Reference is now made to FIG. 9, which is a graph showing temperature profiles of fiber in a split-lamp system and fiber in a combined-lamp system. In the combined-lamp system, the temperature rises quickly from 30° C to 110° C and then moves up gradually. As discussed in connection with FIG. 8, the curing rate at 110° C is much slower than the curing rate at lower temperatures. In the split-lamp system, the cooling gap causes the temperature to drop to about 55° C before curing is resumed. And this speeds up curing dramatically.

FIG. 10 is a graph showing the overall amount of UV exposure needed for curing a coated optical fiber by a split-lamp system as compared to a combined-lamp system. Assuming that about 90% cure is desired within the draw tower, the split-lamp system of the present invention uses less than half the amount of UV exposure as the combined-lamp system of the prior art.

Although various particular embodiments have been shown and described, it is understood that other arrangements may be devised by those skilled in the art which will embody the principles of the invention and fall within the spirit and scope thereof. These arrangements include, but are not limited to, the use of different curing lamps, different photoinitiators, more than two curing stations, and the use of different devices to enhance cooling within the gap between curing stations.

## Claims

1. A method for curing a coated glass fiber 21, having one or more layers of protective coating materials thereon, comprising the steps of:
(i) applying a layer of coating material 25 to the glass fiber;
(ii) partially curing the layer of coating material by exposing same to a first source 30-1 of electromagnetic radiation;
(iii) cooling the partially cured layer of coating material; and
(iv) further curing the layer of coating material by exposing same to a second source 30-2 of electromagnetic radiation.

2. The method of claim 1 wherein the layer of coating material 25 is the primary coating 42, which is immediately adjacent to the glass fiber 21.

3. The method of claim 1 wherein a hot gas boundary layer surrounds the partially cured layer of coating material 25, and wherein step (iii) includes the step of: stripping a portion of the hot gas boundary layer away from the fiber 21.

4. The method of claim 1 wherein step (iii) includes the step of:
causing the coated glass fiber 21 to come into direct contact with one or more rotating sheaves 34.

5. The method of claim 2 wherein step (ii) provides less than 65% of the total curing of the primary coating material 42.

6. The method of claim 5 wherein step (ii) provides more than 25% of the total curing of the primary coating material 42.

7. Apparatus for manufacturing optical fiber including:
a capstan 34 for moving a drawn glass fiber 21 along a path of travel;
a coating applicator 27 for applying one or more layers of protective coating materials 25 to the moving glass fiber;
a first curing station 30-1 for curing one of the layers of coating materials by an amount less than 65% via exposure to electromagnetic radiation;
a second curing station 30-2 for additionally curing said one of the layers of coating materials by an amount greater than 25% via exposure to electromagnetic radiation; and
a cooling gap 35 between the first and second curing stations for reducing the temperature of the coating materials.

8. The apparatus of claim 7 wherein the cooling gap 35 comprises a predetermined distance in which the coated glass fiber 21 is not exposed to electromagnetic radiation, said predetermined distance being greater than 0.5 meters.

9. The apparatus of claim 7 wherein a device for further reducing the temperature of the coating materials 25 is positioned in the gap 35 between the first and second curing stations 30-1, 30-2.

10. The apparatus of claim 9 wherein the device for further reducing the temperature of the coating materials 25 comprises a cylindrical vessel 36 having a plurality of metallic pins 38 that extend radially toward the longitudinal axis of the cylindrical vessel.

11. The apparatus of claim 9 wherein the device for further reducing the temperature of the coating materials 25 comprises one or more sheaves 51, 52 in physical contact with the coated glass fiber 21.
